# EUROPÄISCHE PATENTSCHRIFT

(11) **EP 2 451 249 B1**
(45) Veröffentlichungstag und Bekanntmachung des Hinweises auf die Patenterteilung: **24.05.2017**
(21) Anmeldenummer: 11186643.0
(22) Anmeldetag: 26.10.2011
(51) Int. Cl.: H05B 33/08, B60Q 1/00

(54) **Verfahren zum Steuern der Helligkeit von Halbleiterlichtquellen eines Kraftfahrzeugs und korrespondierende Vorrichtungen**
Method for controlling the brightness of semiconductor light sources of a motor vehicle and corresponding devices
Procédé de commande de l'éclaircissement de sources lumineuses semi-conductrices d'un véhicule automobile et dispositifs correspondants

(30) Priorität: 09.11.2010 DE 102010050851
(43) Veröffentlichungstag der Anmeldung: 09.05.2012
(73) Patentinhaber: Automotive Lighting Reutlingen GmbH, 72762 Reutlingen (DE)
(72) Erfinder: Schnerr, Michael, 70565 Stuttgart (DE); Bormann, Uwe, 89520 Heidenheim (DE)
(74) Vertreter: DREISS Patentanwälte PartG mbB

(56) Entgegenhaltungen:
- WO-A1-2010/007808
- DE-A1-102008 060 042
- DE-A1-102009 025 752

## Beschreibung

Die vorliegende Erfindung betrifft Vorrichtungen nach den Oberbegriffen der unabhängigen Vorrichtungsansprüche 1, 2, und 4, die sich, in dieser Reihenfolge, auf ein Kraftfahrzeug-Lichtsteuergerät, einen Kraftfahrzeugscheinwerfer und eine Kraftfahrzeug-Beleuchtungseinrichtung richten.

Solche Vorrichtungen sind per se bekannt. Aus der DE OS 10 2008 036 193 A1 ist zum Beispiel ein Kraftfahrzeugscheinwerfer bekannt, der eine matrixartige Anordnung von Leuchtdioden als Halbleiterlichtquellen aufweist. Die Leuchtdioden sind von einem Steuergerät gezielt einzeln ansteuerbar, wobei unter einer Ansteuerung insbesondere eine Steuerung des elektrischen Diodenstroms verstanden wird. Das Steuergerät stellt die Helligkeit der Leuchtdioden individuell durch eine Pulsweitenmodulation des elektrischen Diodenstroms ein.

Details der Pulsweitenmodulation und der schaltungstechnischen Ausgestaltung der Ansteuerung der Leuchtdioden werden in der DE 10 2008 036 193 nicht offenbart.

Aus der EP 2 302 706 A1 ist eine schaltungstechnische Konkretisierung bekannt, bei der mehrere Halbleiterlichtquellen in einer durch einen Konstantstromregler gespeisten Reihenschaltung angeordnet sind. Die Halbleiterlichtquellen weisen Halbleiterlichtquellen-individuelle Überbrückungsschalter auf, so dass der durch die Reihenschaltung fließende Strom bei offenem Überbrückungsschalter durch die zugehörige Halbleiterlichtquelle und bei geschlossenem Überbrückungsschalter auf Grund des im Vergleich zum Widerstand der Halbleiterlichtquelle geringeren Widerstands des geschlossenen Überbrückungsschalters über den Überbrückungsschalter fließt.

Mit Blick auf Verfahrensaspekte setzen die Erfinder als bekannt voraus, dass durch periodisches Öffnen und Schließen des Überbrückungsschalters ein mittlerer Stromfluss durch die Halbleiterlichtquelle eingestellt wird, der eine entsprechende mittlere Helligkeit erzeugt.

Dabei variiert die Helligkeit mit der Frequenz des pulsweitenmodulierten Signals. Um einen flackernden Eindruck zu vermeiden, ist die Frequenz so hoch, dass die Variation der Helligkeit vom menschlichen Sehsinn als gleichmäßige mittlere Helligkeit wahrgenommen wird. Dies ist zum Beispiel bei Frequenzen des PWM-Signals von mehr als 200 Hz der Fall.

Alle Halbleiterlichtquellen werden mit einem Tastverhältnis mit gleicher Periodendauer, also gleicher Summe der zeitlichen Dauer der Einschaltphase und der Ausschaltphase betrieben. Unterschiedliche Helligkeiten werden durch unterschiedlich lange Einschaltphasen eingestellt. Mit dem gemeinsamen Beginn einer PWM-Periode werden alle Halbleiterlichtquellen gemeinsam eingeschaltet und, je nach individuell einzustellender Helligkeit, zu unterschiedlichen Zeitpunkten abgeschaltet. Eine Steuerung, bei der die Halbleiterlichtquellen gemeinsam ausgeschaltet und zu individuell verschiedenen Zeitpunkten eingeschaltet werden, ist aus der EP 2 302 706 A1 bekannt.

Die vorliegende Erfindung unterscheidet sich von diesem Stand der Technik jeweils durch die kennzeichnenden Merkmale der unabhängigen Ansprüche.

Die mit diesem Vorgehen verbundenen technischen Effekte und Vorteile werden vor dem folgenden Hintergrund deutlich: Die Erfinder haben erkannt, dass das Ausschalten einer einzelnen Halbleiterlichtquelle bei den bekannten Gegenständen zur Folge hat, dass die Spannung, die an den übrigen, noch eingeschalteten Halbleiterlichtquellen der Reihenschaltung anliegt, kurzzeitig erhöht wird. Die Erhöhung kommt dadurch zustande, dass sich die über der Reihenschaltung abfallende gesamte Spannung vor dem Abschalten einer einzelnen Halbleiterlichtquelle auf zum Beispiel n eingeschaltete Halbleiterlichtquellen der Reihenschaltung aufteilt, während sich die gleiche Spannung unmittelbar nach dem Ausschalten einer einzelnen Halbleiterlichtquelle auf eine entsprechend um eins reduzierte Zahl von n - 1 Halbleiterlichtquellen aufteilt.

Dabei wird unter einer Halbleiterlichtquelle hier jeweils jede Lichtquelle aus Halbleitermaterial verstanden, die beim Leiten eines elektrischen Stroms Licht emittiert. Dies ist insbesondere für Lumineszenzdioden und für Laserdioden der Fall. Auf Grund der exponentiellen Abhängigkeit des elektrischen Stroms durch eine solche Halbleiterlichtquelle von der an ihr anliegenden Spannung ergibt sich aus dem Anstieg der Spannung ein überproportional hoher Anstieg des Stroms, der durch die noch eingeschalteten Halbleiterlichtquellen der Reihenschaltung fließt.

Dieser Stromanstieg wird zwar durch eine Reaktion des Konstantstromreglers der Reihenschaltung wieder ausgeregelt, für diese Ausregelung ist jedoch eine gewisse Zeitspanne erforderlich, in der die Stromstärke des durch die noch leitenden Halbleiterlichtquellen der Reihenschaltung fließenden Stroms zunächst steil ansteigt, bevor sie wieder auf ihren Ausgangswert zurücksinkt. Vergleichsweise steile Flanken von Stromverläufen über der Zeit führen bekanntlich zur Abstrahlung von elektromagnetischen Wellen mit vergleichsweise großer Energie, die sich in der Umgebung als Störung anderer elektrischer und/oder elektronischer Komponenten des Kraftfahrzeugs oder als Störungen des Signalempfangs in einer Umgebung des Kraftfahrzeugs bemerkbar machen können.

Diese Nachteile werden bei der Erfindung dadurch vermieden, dass Halbleiterlichtquellen deren mittlere Helligkeit auf verschiedene Werte eingestellt werden soll, innerhalb einer Periodendauer des pulsweitenmodulierten Signals jeweils zu verschiedenen Zeitpunkten eingeschaltet und zu einem für die Halbleiterlichtquellen gleichen Zeitpunkt gemeinsam ausgeschaltet werden.

Wenn die Halbleiterlichtquellen in einer Reihenschaltung zu verschiedenen Zeitpunkten und damit zeitlich versetzt zueinander eingeschaltet werden, teilt sich die über der gesamten Reihenschaltung abfallende Spannung kurz vor dem Einschalten einer weiteren Halbleiterlichtquelle auf m bereits eingeschaltete Halbleiterlichtquellen auf, während sich die gleiche Spannung unmittelbar nach dem Einschalten der weiteren Halbleiterlichtquelle auf m + 1 Halbleiterlichtquellen aufteilt.

Die an einer einzelnen Halbleiterlichtquelle anliegende Spannung sinkt daher zunächst ab. Als Folge sinkt auch der Stromfluss durch die Halbleiterlichtquelle kurzzeitig ab. Wegen des exponentiellen Verlaufs der Strom-Spannungs-Kennlinien der Halbleiterlichtquellen ist dieser Effekt aber wesentlich schwächer ausgeprägt als der beim Abschalten einer Halbleiterlichtquelle beobachtbare Effekt eines starken Stromanstiegs. Die Amplitude und auch die Steigung des beim zeitlich versetzten Einschalten der Halbleiterlichtquellen auftretenden Stromeinbruchs ist jeweils wesentlich kleiner als die beim zeitlich versetzten Ausschalten der Halbleiterlichtquellen auftretenden Amplituden und Steigungen der pulsförmigen Stromanstiege.

Dadurch wird weniger Energie abgestrahlt. Als Folge stellt sich eine signifikant verbesserte elektromagnetische Verträglichkeit ein.

Außerdem beeinträchtigt ein kurzer, vergleichsweise flacher Stromeinbruch die Lebensdauer der Halbleiterlichtquellen nicht oder zumindest wesentlich weniger als der starke, kurzzeitige Stromanstieg beim Überbrücken einer einzelnen Halbleiterlichtquelle in einer Reihenschaltung aus mehreren, einen Strom leitenden Halbleiterlichtquellen.

Beim erfindungsgemäß gemeinsam erfolgenden Ausschalten kommt es nicht zu temporären Spannungsüberhöhungen an einzelnen Halbleiterlichtquellen, da sämtliche Halbleiterlichtquellen einer Reihenschaltung gemeinsam überbrückt werden.

Die Verwendung von einem oder mehreren Seriell-Parallel-Wandlern für die Steuerung der Überbrückungsschalter der Anordnung von Halbleiterlichtquellen erlaubt eine starke Reduzierung der Anzahl von Steuerleitungen, die vom Lichtsteuergerät zur Ansteuerschaltung im Kraftfahrzeugscheinwerfer führen. Dies ist ein wesentlicher Vorteil, weil dadurch Gewicht und Kosten eingespart werden. Vorteilhaft ist auch, dass die elektromagnetische Verträglichkeit der Anordnung wegen des Wegfalls einer Vielzahl von Leitungen, die ihrerseits selbst Störungen abstrahlen können und andererseits Störungen aus dem Umfeld aufnehmen können, im Vergleich zu einer Ausgestaltung stark verbessert wird, bei der die Steuerverbindung des Lichtsteuergerätes zu den Überbrückungsschaltern jeweils Überbrückungsschalter-individuelle Leitungspfade enthalten würde.

Weitere Vorteile ergeben sich aus den abhängigen Ansprüchen, der Beschreibung und den beigefügten Figuren.

Es versteht sich, dass die vorstehend genannten und die nachstehend noch zu erläuternden Merkmale nicht nur in der jeweils angegeben Kombination, sondern auch in anderen Kombinationen oder in Alleinstellung verwendbar sind, ohne den Rahmen der vorliegenden Erfindung zu verlassen.

### Zeichnungen

Ausführungsbeispiele der Erfindung sind in den Zeichnungen dargestellt und werden in der nachfolgenden Beschreibung näher erläutert. Dabei zeigen, jeweils in schematischer Form:
- Figur 1: das technische Umfeld der Erfindung in Form einer Kraftfahrzeugbeleuchtungseinrichtung;
- Figur 2: einen Querschnitt durch einen Kraftfahrzeugscheinwerfer;
- Figur 3: ein Ersatzschaltbild einer Anordnung von Halbleiterlichtquellen, Konstantstromreglern, eines Seriell-Parallel-Wandlers und einer Spannungsquelle;
- Figur 4: zeitliche Verläufe von Tastverhältnissen für die Steuerung verschiedener Halbleiterlichtquellen in einer Reihenschaltung; und
- Figur 5: zeitliche Verläufe der Stromstärke des von einer Halbleiterlichtquelle geleiteten Stroms beim Stand der Technik und gemäß der Erfindung.

Dabei bezeichnen gleiche Bezugszeichen in verschiedenen Figuren jeweils gleiche oder zumindest ihrer Funktion nach gleiche Elemente.

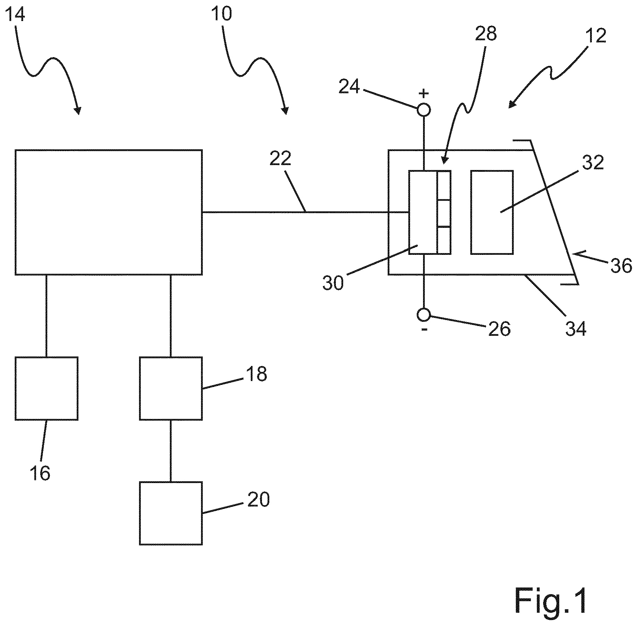

Die Figur 1 zeigt eine Kraftfahrzeugbeleuchtungseinrichtung 10 mit einem Kraftfahrzeugscheinwerfer 12, einem Kraftfahrzeug-Lichtsteuergerät 14, einem Fahrerwunschgeber 16, einem weiteren Steuergerät 18, einem Sensor 20, einer Datenleitung 22, einem Pluspol 24 und einem Minuspol 26 eines elektrischen Bordnetzes des Kraftfahrzeugs.

Der Kraftfahrzeugscheinwerfer 12 weist eine Anordnung 28 von Halbleiterlichtquellen auf, die von einer Ansteuerschaltung 30 individuell gesteuert werden. Zu diesem Zweck ist die Ansteuerschaltung 30 über die Datenleitung 22 mit dem Kraftfahrzeug-Lichtsteuergerät 14 verbunden. Zur Versorgung der Halbleiterlichtquelle mit elektrischer Energie ist die Ansteuerschaltung 30 mit dem Pluspol 24 und dem Minuspol 26 des elektrischen Bordnetzes des Kraftfahrzeugs verbunden.

Eine Optik 32 dient dazu, Licht der Anordnung 28 von Halbleiterlichtquellen in vorbestimmter Weise in das Vorfeld vor dem Kraftfahrzeugscheinwerfer 12 zu richten, um dort eine jeweils gewünschte Lichtverteilung zu erzeugen. Je nach Ausgestaltung des Kraftfahrzeugscheinwerfers 12 kann es sich bei der Optik 32 um eine lichtreflektierende oder lichtbrechende Optik oder um eine Kombination aus solchen Optiken und/oder um das Prinzip der internen Totalreflexion nutzende Optiken (TIR-Optiken) oder um Kombinationen solcher TIR-Optiken mit normalreflektierenden oder lichtbrechenden Optiken handeln.

Die Anordnung 28 von Halbleiterlichtquellen bildet zusammen mit der Ansteuerschaltung 30 und der Optik 32 ein Lichtmodul. Neben einem solchen Lichtmodul kann der Scheinwerfer 12 auch weitere Lichtmodule aufweisen, die dazu dienen, andere Lichtverteilungen, seien es zur Beleuchtung des Fahrzeugvorfeldes dienende Scheinwerferlichtverteilungen wie Abblendlichtverteilungen, Fernlichtverteilungen und Nebellichtverteilungen oder aber Signalzwecken dienende Lichtverteilungen wie Blinklichtverteilungen und Tagfahrlichtverteilungen. Dabei sind diese Aufzählungen nicht abschließend gemeint.

Das Lichtmodul und die gegebenenfalls weiteren Lichtmodule sind in einem Gehäuse 34 des Scheinwerfers 12 untergebracht, dessen Lichtaustrittsöffnung von einer transparenten Abdeckscheibe 36 abgedeckt wird.

Die Ansteuerschaltung 30 wird ihrerseits über die Datenleitung 22 vom Lichtsteuergerät 14 gesteuert. Das Lichtsteuergerät 14 gibt der Ansteuerschaltung 30 damit insbesondere vor, welche Halbleiterlichtquellen der Anordnung 28 von Halbleiterlichtquellen mit welcher Helligkeit betrieben werden sollen, um eine vorbestimmte Lichtverteilung im Vorfeld des Kraftfahrzeugscheinwerfers 12 zu erzielen.

In einer Ausgestaltung gibt das Lichtsteuergerät 14 zum Beispiel vor, dass sämtliche Halbleiterlichtquellen der Anordnung 28 von Halbleiterlichtquellen mit maximaler Helligkeit betrieben werden sollen, um eine weitreichende Fernlichtverteilung zu erzeugen. Um eine Abblendlichtverteilung zu erzeugen, wird das Lichtsteuergerät 14 dagegen Daten über die Datenleitung 22 ausgeben, mit denen bestimmte Halbleiterlichtquellen der Anordnung 28 von Halbleiterlichtquellen deaktiviert oder in ihrer Helligkeit gedimmt werden, um eine Hell-Dunkel-Grenze in der Lichtverteilung zu erzeugen, mit der eine Blendung anderer Verkehrsteilnehmer vermieden oder zumindest verringert wird.

Das Lichtsteuergerät 14 wird seinerseits von einem Fahrerwunschgeber 16 gesteuert, der in einer Ausgestaltung als Lichtschalter im Innenraum des Kraftfahrzeugs realisiert ist und mit dem der Fahrer vorgibt, ob er zum Beispiel eine Abblendlichtverteilung oder eine Fernlichtverteilung oder eine andere einstellbare Lichtverteilung erzeugen möchte.

Eine andere Ausgestaltung sieht vor, dass das Lichtsteuergerät 14 seinerseits alternativ oder ergänzend zu einer Steuerung durch den Fahrerwunschgeber 16 durch ein weiteres Steuergerät 18 gesteuert wird, das Signale eines Sensors 20 verarbeitet, der das Fahrzeugvorfeld überwacht. Bei dem Sensor 20 kann es sich zum Beispiel um eine Kamera oder um einen Radarsensor handeln. Das Steuergerät wertet die Signale eines solchen Sensors aus und löst über seine Verbindung zum Lichtsteuergerät 14 Veränderungen der gerade eingestellten Lichtverteilung aus, wenn bestimmte Bedingungen erfüllt sind.

So sieht eine Ausgestaltung vor, dass der Sensor 20 das Fahrzeugvorfeld auf entgegenkommende Verkehrsteilnehmer überwacht und gegebenenfalls eine Änderung der Lichtverteilung auslöst, mit der eine Beleuchtungsintensität im Bereich des entgegenkommenden Verkehrsteilnehmers reduziert wird, um eine Blendung dieses Verkehrsteilnehmers zu vermeiden. Die dann resultierende Lichtverteilung wird häufig auch als Teilfernlichtverteilung bezeichnet.

In einer alternativen oder ergänzenden Ausgestaltung überwacht das Steuergerät 18 mit Hilfe des Sensors 20 das Vorfeld des Kraftfahrzeuges auf Objekte, von denen eine Gefahr für das Kraftfahrzeug ausgehen könnte oder die von dem Kraftfahrzeug gefährdet werden könnten und verstärkt gegebenenfalls die Beleuchtung eines solchen Gefahrenobjektes durch eine Änderung der Lichtverteilung, um den Fahrer auf die Gefahr aufmerksam zu machen.

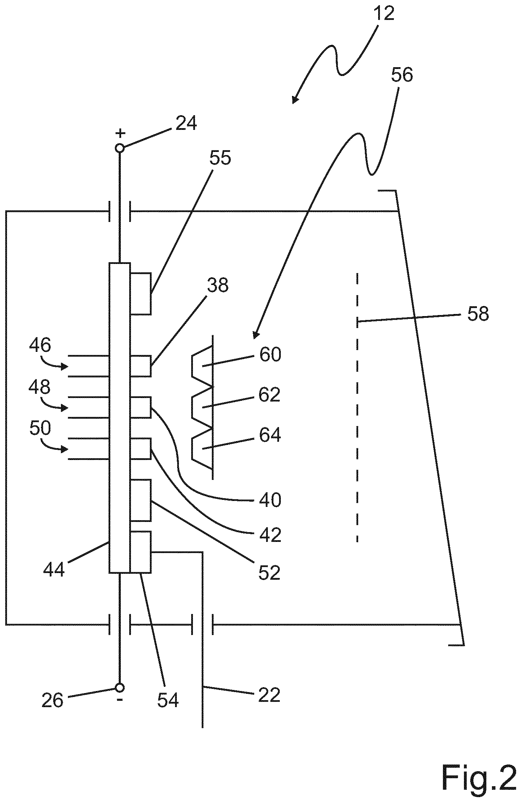

Die Figur 2 zeigt einen Querschnitt durch den Kraftfahrzeugscheinwerfer 12 aus der Figur 1 mit weiteren Details. Danach weist die Anordnung 28 von Halbleiterlichtquellen einzelne Halbleiterlichtquellen auf, von denen in Figur 2 drei Halbleiterlichtquellen 38, 40, 42 stellvertretend für alle möglichen Anordnungen aus Halbleiterlichtquellen dargestellt sind. In einer bevorzugten Ausgestaltung weist die Anordnung 28 zwanzig bis zweihundert Halbleiterlichtquellen auf, die in einer Matrix angeordnet sind.

Bevorzugt ist auch, dass jede Halbleiterlichtquelle eine oder mehrere Lumineszenz- oder Laserdioden aufweist, die auf einem gemeinsamen Chip angeordnet sind. Alternativ können auch mehrere Halbleiterlichtquellen auf einem Chip zusammengefasst sein. Die Halbleiterlichtquellen 38, 40, 42 sind bevorzugt auf einer Leiterplatte 44 zusammen mit Komponenten ihrer Ansteuerschaltung 30 angeordnet. Darüber hinaus sind die Halbleiterlichtquellen 38, 40, 42 der Anordnung 28 von Halbleiterlichtquellen bevorzugt mit Kühlelementen 46, 48, 50 in Form von Kühlrippen oder Kühlstiften thermisch verbunden, über die eine beim Betrieb der Halbleiterlichtquellen in deren Chips freiwerdende elektrische Verlustwärme an die Umgebung abgeführt wird. In der dargestellten Ausgestaltung sind die Halbleiterlichtquellen 38, 40, 42 auf einer Seite der Leiterplatte 44 angeordnet, während Kühlelemente 46, 48, 50 auf der anderen Seite der Leiterplatte 44 angeordnet sind. Die Halbleiterlichtquellen 38, 40, 42 sind mit ihren Kühlelementen 46, 48, 50 durch die Leiterplatte hindurch thermisch verbunden, zum Beispiel durch Ausführung der Leiterplatte 44 als Metallkernplatine.

Die Halbleiterlichtquellen der Anordnung 28 von Halbleiterlichtquellen sind bevorzugt in einer Mehrzahl von Reihenschaltungen angeordnet, von denen jede eine Konstantstromregler 52 aufweist, der dazu eingerichtet ist, den Strom durch die Reihenschaltung unabhängig davon, welche und wie viele der Halbleiterlichtquellen der Reihenschaltung gerade eingeschaltet sind, auf einen möglichst konstanten Wert zu regeln.

Dabei wird man aus ökonomischen Gründen versuchen, die Zahl der Reihenschaltungen und damit die Zahl der Konstantstromquellen möglichst gering zu halten. Gleichwohl ist eine Mehrzahl von Reihenschaltungen und eine Mehrzahl von Konstantstromquellen erforderlich, da sich die über einer Reihenschaltung aus Halbleiterlichtquellen abfallende Maximalspannung als Summe der Flussspannungen der Halbleiterlichtquellen ergibt. Bei zum Beispiel zwölf Halbleiterlichtquellen in einer Reihenschaltung und einer Flussspannung jeder einzelnen Halbleiterlichtquelle von 3 V ergibt sich ein maximaler Spannungsabfall über der Reihenschaltung von 36 V. Diese Spannung wird in einer bevorzugten Ausgestaltung durch einen DC-DC-Wandler 55 aus der Bordnetzspannung erzeugt.

Wenn alle Halbleiterlichtquellen der Reihenschaltung ausgeschaltet sind, fällt diese Spannung über den Bauteilen des Konstantstromreglers 52 ab, die eine entsprechend hohe Spannungsfestigkeit aufweisen müssen. Halbleiterbauteile, wie Leistungstransistoren für den Automobilbereich weisen häufig eine Spannungsfestigkeit im Bereich von cirka 50 V auf. Diese Spannungsfestigkeit, also zum Beispiel der Wert von 50 V, beschränkt die pro Reihenschaltung mögliche Maximalzahl von Halbleiterlichtquellen und erzwingt so die Notwendigkeit, mehrere Reihenschaltungen und damit mehrere Konstantstromregler in der Ansteuerschaltung 30 auf der Leiterplatte 44 vorsehen zu müssen.

In einer bevorzugten Ausgestaltung weist die Ansteuerschaltung 30 einen auf der Leiterplatte 44 angeordneten Seriell-Parallel-Wandler 54 auf, der über die Datenleitung 22 mit dem Lichtsteuergerät 14 verbunden ist und der für jede individuell schaltbare Halbleiterlichtquelle der Anordnung 28 von Halbleiterlichtquellen einen Ausgang besitzt, über den diese Halbleiterlichtquelle individuell steuerbar ist. Je nach Ausgestaltung ist ein Seriell-Parallel-Wandler 54 für alle Halbleiterlichtquellen der Anordnung 28 von Halbleiterlichtquellen vorgesehen, oder es ist je ein Seriell-Parallel-Wandler 54 für jeweils eine Reihenschaltung oder jeweils eine Gruppe von Reihenschaltungen von Halbleiterlichtquellen vorgesehen.

Die im Zusammenhang mit der Figur 1 erwähnte Optik 32 besteht in der Ausgestaltung, die in der Figur 2 dargestellt ist, aus einer Primäroptik 56 und einer Sekundäroptik 58. Die Primäroptik 56 ist dazu eingerichtet, dass Licht der Anordnung 28 von Halbleiterlichtquellen so zu bündeln, dass in einer Brennebene der Sekundäroptik 58 eine erste Lichtverteilung innerhalb des Scheinwerfers 12 entsteht, die von der Sekundäroptik 58 dann als zweite Lichtverteilung in das Vorfeld des Kraftfahrzeugscheinwerfers 12 projiziert wird. Bei der Sekundäroptik 58 handelt es sich bevorzugt um eine Projektionslinse.

Die Primäroptik 56 weist bevorzugt wenigstens einen normalreflektierenden Reflektor und/oder eine Vielzahl von das Prinzip der internen Totalreflexion nutzenden optischen Elementen 60, 62, 64 aus lichtleitendem Material auf. Dabei ist bevorzugt je ein optisches Element je einer Halbleiterlichtquelle oder einer Gruppe von Halbleiterlichtquellen zugeordnet. Die Zuordnung erfolgt dabei durch eine aufeinander bezogene Anordnung der jeweiligen Halbleiterlichtquelle und des optischen Elementes, bei der das optische Element das Licht der Halbleiterlichtquelle möglichst vollständig aufnimmt und über eine Lichtaustrittsfläche des optischen Elements austreten lässt.

Die Lichtaustrittsflächen der optischen Elemente sind bevorzugt aneinander anstoßend angeordnet, so dass sich bei eingeschalteten Halbleiterlichtquellen der Anordnung 28 von Halbleiterlichtquellen eine leuchtende Lichtaustrittsfläche der Primäroptik 60 ergibt. Die leuchtende Lichtaustrittsfläche bildet so die erste Lichtverteilung. Je nachdem, welche Halbleiterlichtquellen der Anordnung 28 von Halbleiterlichtquellen eingeschaltet sind und mit welcher mittleren Helligkeit diese jeweils betrieben werden, lassen sich ganz unterschiedliche erste Lichtverteilungen erzeugen, die dann von der Sekundäroptik 58 in das Vorfeld des Scheinwerfers 12 abgebildet werden.

Die optischen Elemente 60, 62, 64 verbreitern sich dabei ausgehend von ihren Lichteintrittsflächen in Richtung zu ihren Lichtaustrittsflächen, so dass die Lichteintrittsflächen jeweils in einem gewissen Abstand voneinander angeordnet sind. Dies ermöglicht eine Anordnung der Halbleiterlichtquellen der Anordnung 28 von Halbleiterlichtquellen in Abständen auf der Leiterplatte 44, die eine zwischen den einzelnen Halbleiterlichtquellen liegende Leitungsführung auf der Leiterplatte 44 erlaubt und die darüber hinaus eine verbesserte Kühlung der einzelnen Halbleiterlichtquellen erlaubt.

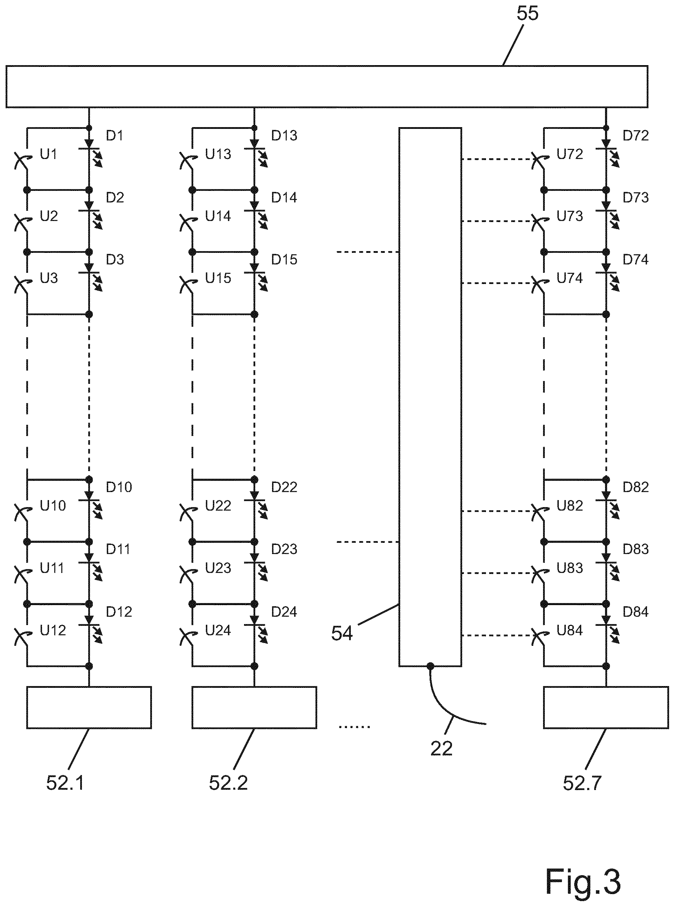

Figur 3 zeigt ein Ersatzschaltbild einer Anordnung von vierundachtzig Halbleiterlichtquellen D1 bis D84, Konstantstromreglern 52.1, 52.2, ..., 52.7, eines Seriell-Parallel-Wandlers 54 und einer Spannungsquelle in Form eines Hochsetz-Stellers, beziehungsweise DC-DC-Wandlers 55.

Die vierundachtzig Halbleiterlichtquellen D1 bis D84 stellen eine Ausgestaltung der Anordnung 28 von Halbleiterlichtquellen dar. Die übrigen, in der Figur 3 dargestellten Komponenten stellen die Ansteuerschaltung 30 dar. Sowohl die Ansteuerschaltung 30 als auch die vierundachtzig Halbleiterlichtquellen D1 bis D84 sind auf der Leiterplatte 44 angeordnet.

Jede Reihenschaltung weist in der Ausgestaltung, die in der Figur 3 dargestellt ist, 12 Halbleiterlichtquellen auf, von denen jeweils die sechs äußeren explizit dargestellt sind. Das obere Ende jeder Reihenschaltung ist jeweils an den DC-DC-Wandler 55 angeschlossen. In der dargestellten Ausgestaltung weist jede Reihenschaltung darüber hinaus pro Reihenschaltung jeweils einen Konstantstromregler 52.1, 52.2, ... 52.7 auf, der am jeweiligen anderen Ende der jeweiligen Reihenschaltung angeordnet ist und der dazu eingerichtet ist, den Stromfluss durch die Reihenschaltung auf einen möglichst konstanten Wert zu regeln.

Jede der Halbleiterlichtquellen D1 bis D84 weist einen individuell ihr zugeordneten und parallel zu ihr geschalteten Überbrückungsschalter U1, ..., U84 auf. Die Überbrückungsschalter einer Reihenschaltung von Halbleiterlichtquellen bilden damit ihrerseits selbst wieder eine Reihenschaltung, die elektrisch jeweils zwischen dem DC-DC-Wandler 55 und dem jeweiligen Konstantstrom-Regler der jeweiligen Reihenschaltung liegt. Bei geöffnetem Überbrückungsschalter einer Halbleiterlichtquelle fließt der in ihrer Reihenschaltung fließende Strom über diese Halbleiterlichtquelle. Wird der Überbrückungsschalter einer Halbleiterlichtquelle dagegen geschlossen, fließt der Strom nicht mehr über diese Halbleiterlichtquelle, sondern über den Überbrückungsschalter.

Der Strompfad einer Reihenschaltung kann daher geradlinig durch sämtliche Halbleiterlichtquellen der Reihenschaltung verlaufen, oder er kann geradlinig über sämtliche geschlossenen Überbrückungsschalter der Reihenschaltung verlaufen, oder er kann über eine Teilmenge der Halbleiterlichtquelle einer Reihenschaltung und über die geschlossenen Überbrückungsschalter der komplementären Teilmenge von Halbleiterlichtquellen dieser Reihenschaltung verlaufen.

Durch eine individuelle Ansteuerung der Überbrückungsschalter einer Reihenschaltung lassen sich damit eine Vielzahl von Beleuchtungszuständen dieser Reihenschaltung einstellen. Im Zusammenwirken sämtlicher Reihenschaltungen lassen sich damit eine Vielzahl von Lichtverteilungen einstellen. Bei einer Anordnung der vierundachtzig Halbleiterlichtquellen D1 bis D84 und ihrer jeweils zugehörigen optischen Elemente in einer Matrix lassen sich damit zum Beispiel Lichtverteilungen mit Hell-Dunkel-Grenzen erzeugen, die jeweils Bereiche der Matrix mit eingeschalteten Halbleiterlichtquellen und ausgeschalteten Halbleiterlichtquellen voneinander trennen. Die Hell-Dunkel-Grenzen können sowohl vertikal als auch horizontal verlaufen. Darüber hinaus können verschiedene Bereiche der Matrix so gesteuert werden, dass sich verschieden helle Bereiche in der von der Matrix erzeugten Lichtverteilung ergeben.

Die individuelle Ansteuerung der Halbleiterlichtquellen über eine individuelle Ansteuerung ihrer jeweils zugeordneten Überbrückungsschalter erfolgt in einer bevorzugten Ausgestaltung über wenigstens einen Seriell-Parallel-Wandler 54, der über die Datenleitung 22 von dem Lichtsteuergerät 14 periodisch mit Steuerdaten für die an Ausgänge des Seriell-Parallel-Wandlers 54 angeschlossenen Überbrückungsschalter gefüllt wird.

In der dargestellten Ausgestaltung ist für jede Reihenschaltung ein Seriell-Parallel-Wandler 54 vorgehen, wobei aus Gründen der Übersichtlichkeit nur ein Seriell-Parallel-Wandler 54 dargestellt ist, der die aus zwölf Halbleiterlichtquellen D72 bis D84 bestehende Reihenschaltung durch Betätigen der dazu elektrisch parallel liegenden Überbrückungsschalter U72 bis U84 steuert.

Die Verwendung von einem oder mehreren Seriell-Parallel-Wandlern 54 für die Steuerung der Überbrückungsschalter der Anordnung 28 von Halbleiterlichtquellen erlaubt eine starke Reduzierung der Anzahl von Steuerleitungen, die vom Lichtsteuergerät 14 zur Ansteuerschaltung 30 im Kraftfahrzeugscheinwerfer 12 führen. Dies ist ein wesentlicher Vorteil, weil dadurch Gewicht und Kosten eingespart werden. Vorteilhaft ist auch, dass die elektromagnetische Verträglichkeit der Anordnung wegen des Wegfalls einer Vielzahl von Leitungen, die ihrerseits selbst Störungen abstrahlen können und andererseits Störungen aus dem Umfeld aufnehmen können, im Vergleich zu einer Ausgestaltung stark verbessert wird, bei der die Steuerverbindung des Lichtsteuergerätes 14 zu den Überbrückungsschaltern jeweils Überbrückungsschalter-individuelle Leitungspfade enthalten würde.

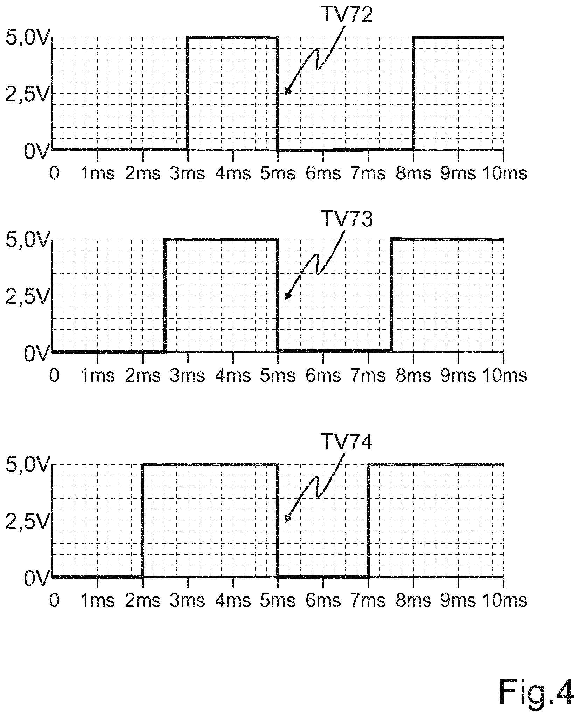

Figur 4 zeigt zeitliche Verläufe von Tastverhältnissen zur zeitlich koordinierten Ansteuerung von Halbleiterlichtquellen einer Reihenschaltung aus dem Ersatzschaltbild der Figur 3. Konkret zeigt die Figur 4 Tastverhältnisse TV72, TV73 und TV74 zur Ansteuerung der drei Überbrückungsschalter U72, U73, und U74 aus der ganz rechten Reihenschaltung der Figur 3. Die Signale sind jeweils über der Zeit aufgetragen und variieren zwischen 0 und 5 V. Ein hoher Signalpegel entspricht jeweils einem Stromfluss durch die zugeordnete Halbleiterlichtquelle D72, D73 oder D74 und damit einem offenen zugeordneten Überbrückungsschalter U72, U73, U74. Die niedrigen Signalpegel entsprechen ausgeschalteten Halbleiterlichtquellen 072, 073, 074 und damit geschlossenen zugeordneten Überbrückungsschaltern U72, U73 und U74.

Figur 4 zeigt genau zwei Perioden der pulsweitenmodulierten Ansteuersignale für die drei Überbrückungsschalter U72, U73 und U74, wobei jede Periode 5 ms lang ist, eine erste Periode von t = 0 ms bis t = 5 ms geht, und eine zweite Periode von t = 5 ms bis t = 10 ms geht. Die Überbrückungsschalter U72, U73 und U74 werden zusammen mit den übrigen Überbrückungsschaltern (U1 - U84) insofern synchron angesteuert, als dass der Beginn und das Ende einer Periode des pulsweitenmodulierten Ansteuersignals für alle Überbrückungsschalter untereinander jeweils gleich ist.

Im Vergleich der drei Tastverhältnisse nimmt die Einschaltdauer der jeweiligen Halbleiterlichtquelle D72, D73, D74 von oben nach unten zu. Dies entspricht einer Regelung, bei der die mittlere Helligkeit der Halbleiterlichtquelle D72 kleiner sein soll als die mittlere Helligkeit der Halbleiterlichtquelle D73 und bei der die mittlere Helligkeit der Halbleiterlichtquelle D73 wiederum kleiner als die mittlere Helligkeit der Halbleiterlichtquelle D74 sein soll. Die Figur 4 bildet demnach eine Situation ab, bei der mittlere Helligkeiten von Halbleiterlichtquellen D72, D73, D74 auf verschiedene Werte eingestellt werden sollen.

Figur 4 verdeutlicht darüber hinaus den Verfahrensaspekt der Erfindung, nach der solche Halbleiterlichtquellen D72, D73 und D74 innerhalb einer Periode des pulsweitenmodulierten Signals jeweils einzeln zu verschiedenen Zeitpunkten eingeschaltet (hoher Signalpegel) und zu einem für die Halbleiterlichtquellen D72, D73, D74 gleichen Zeitpunkt gemeinsam ausgeschaltet (niedriger Signalpegel) werden.

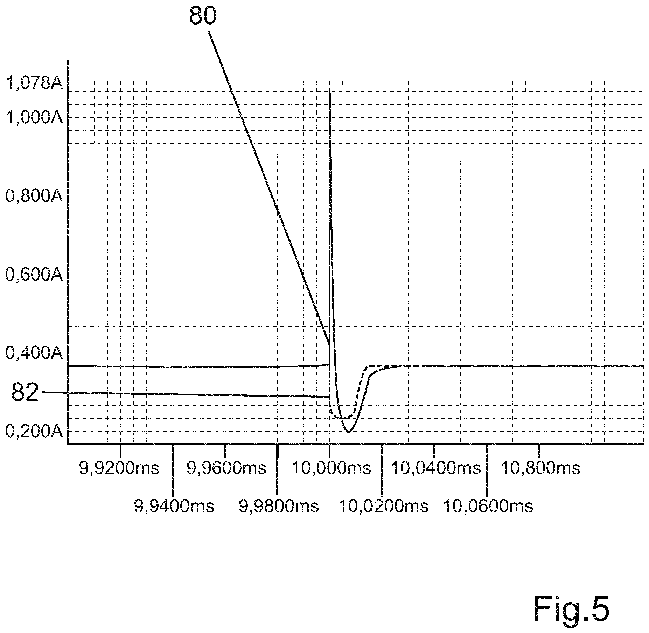

Figur 5 zeigt zeitlich Verläufe der Stromstärke des von einer Halbleiterlichtquelle bei einer solchen Helligkeitsregelung geleiteten Stroms beim Stand der Technik und gemäß der Erfindung. Dabei repräsentiert der Verlauf 80 einen Verlauf, wie er sich beim Stand der Technik ergibt, wenn eine einzelne Halbleiterlichtquelle zeitlich getrennt von den anderen Halbleiterlichtquellen einzeln ausgeschaltet wird. Der Verlauf 82 entspricht dagegen einem Verlauf, wie er sich bei der Erfindung ergibt, wenn eine einzelne Halbleiterlichtquelle zeitlich getrennt von den anderen Halbleiterlichtquellen ihrer Reihenschaltung eingeschaltet wird.

In beiden Fällen ändert sich kurzfristig und vorübergehend der mittlere Stromfluss durch die Reihenschaltung, der in dem gewählten Beispiel bei 350 mA liegt. Zum Ausregeln der kurzzeitigen Stromänderung braucht der beteiligte Konstantstromregler jeweils etwa 2 ms. Wie bereits weiter vorne im Detail beschrieben, ergibt sich beim Ausschalten einer einzelnen Halbleiterlichtquelle vorübergehend eine höhere Spannung über den übrigen, eingeschalteten Halbleiterlichtquellen der beteiligten Reihenschaltung, was aufgrund der exponentiellen Strom-Spannungs-Kennlinie der Halbleiterlichtquellen zu dem starken, impulsförmigen Anstieg des Stroms durch die Reihenschaltung führt, der im Beispiel des Verlaufs 80 einem Anstieg von 350 mA auf kurzzeitig auf über 1.000 mA entspricht. Dies wirkt sich verkürzend auf die Lebensdauer der Halbleiterlichtquellen aus, die diesen Strom leiten müssen. Darüber hinaus erzeugt der steile Anstieg abgestrahlte Störungen, die die EMV-Verträglichkeit beeinträchtigen.

Bei der Erfindung, deren Wirkung sich im Verlauf 82 abbildet, erfolgt dagegen ein zeitlich versetztes Einschalten der Halbleiterlichtquellen in einer Reihenschaltung. Durch das zeitlich versetzte Einschalten tritt ein dem Verhalten des Verlaufs 80 entgegengesetzt gerichteter Effekt auf. Durch das Einschalten sinkt die Spannung über den übrigen, bereits eingeschalteten Halbleiterlichtquellen der Reihenschaltung kurzzeitig ab, so dass sich der Stromfluss durch diese Halbleiterlichtquellen und damit durch die gesamte Reihenschaltung verringert. Aufgrund der exponentiellen Strom-Spannungs-Kennlinie der Halbleiterlichtquellen ist die Amplitude des vorübergehenden Einbruchs aber wesentlich geringer als die Amplitude des Stromanstiegs im Verlauf 80. Insgesamt ist der Verlauf des Stromeinbruchs im Signal 82 auch wesentlich weniger steil, so dass auch weniger Störstrahlung erzeugt wird. Der kurzzeitige Einbruch des Stromflusses beeinträchtigt die Lebensdauer der beteiligten Halbleiterlichtquellen nicht.

## Patentansprüche

1. Kraftfahrzeug-Lichtsteuergerät (14), das dazu eingerichtet ist, eine Helligkeit von Halbleiterlichtquellen (D72, D73, ..., D84) eines Kraftfahrzeugscheinwerfers (12) zu steuern, die in einer durch einen Konstantstromregler (52.7) gespeisten Reihenschaltung angeordnet sind und durch Betätigen von Halbleiterlichtquellen-individuellen Überbrückungsschaltern (U72, U73, ..., U84) einzeln einschaltbar und ausschaltbar sind, wobei das Steuergerät (14) dazu eingerichtet ist, mittlere Helligkeiten der Halbleiterlichtquellen (D72, D73, ..., D84) durch Betätigen der Überbrückungsschalter (U72, U73, ..., U84) mit pulsweitenmodulierten Signalen einzustellen, deren Periodendauer für die Halbleiterlichtquellen (D72, D73, ..., D84) gleich ist, wobei das Steuergerät (14) dazu eingerichtet ist, Halbleiterlichtquellen (D72, D73, D74), deren mittlere Helligkeit auf verschiedene Werte eingestellt werden soll, innerhalb einer Periode des pulsweitenmodulierten Signals jeweils einzeln zu verschiedenen Zeitpunkten einzuschalten und zu einem für die Halbleiterlichtquellen (D72, D73, D74) gleichen Zeitpunkt gemeinsam auszuschalten, **dadurch gekennzeichnet, dass** das Lichtsteuergerät dazu eingerichtet ist, zur Steuerung der Helligkeit der Halbleiterlichtquellen (D72, D73, D74) Sequenzen serieller Daten zu erzeugen und dem Scheinwerfer (12) zu übergeben, wobei die Sequenzen jeweils für jeden Überbrückungsschalter (U72, U73, U74) ein seinen Schaltzustand steuerndes Steuerbit aufweisen.

2. Halbleiterlichtquellen (D72, D73, ..., D84) aufweisender Kraftfahrzeugscheinwerfer (12), der dazu eingerichtet ist, eine Helligkeit der Halbleiterlichtquellen (D72, D73, ..., D84) steuern zu lassen, wobei die Halbleiterlichtquellen (D72, D73, ..., D84) in einer Reihenschaltung angeordnet sind, die dazu eingerichtet ist, durch einen Konstantstromregler (52.7) gespeist zu werden, wobei der Scheinwerfer (12) Halbleiterlichtquellen-individuelle Überbrückungsschalter (U72, U73, ..., U84) aufweist, die einzeln einschaltbar und ausschaltbar sind, und wobei der Scheinwerfer (12) dazu eingerichtet ist, mittlere Helligkeiten der Halbleiterlichtquellen (D72, D73, ..., D84) durch Betätigen der Überbrückungsschalter (U72, U73, ...U84) mit pulsweitenmodulierten Signalen einstellen zu lassen, deren Periodendauer für die Halbleiterlichtquellen (D72, D73, D74) gleich ist, wobei der Scheinwerfer (12) dazu eingerichtet ist, Halbleiterlichtquellen (D72, D73, D74) deren mittlere Helligkeit auf verschiedene Werte eingestellt werden soll, innerhalb einer Periode ihres pulsweitenmodulierten Signals jeweils einzeln zu verschiedenen Zeitpunkten einschalten zu lassen und zu einem für die Halbleiterlichtquellen (D72, D73, D74) gleichen Zeitpunkt gemeinsam ausschalten zu lassen, **dadurch gekennzeichnet, dass** der Scheinwerfer einen Seriell-Parallel-Wandler (54) aufweist, der einen zur Aufnahme serieller Daten eingerichteten Eingang und für jeden Überbrückungsschalter (U72, U73, U74) einen Ausgang aufweist und dazu eingerichtet ist, die Überbrückungsschalter (U72, U73, U74) mit an seinen Ausgängen liegenden Daten zu steuern.

3. Scheinwerfer (12) nach Anspruch 2, **dadurch gekennzeichnet, dass** jede Halbleiterlichtquelle (D72, D73, D74) eine oder mehrere Leuchtdioden aufweist.

4. Kraftfahrzeug-Beleuchtungseinrichtung (10) **dadurch gekennzeichnet, dass** die Beleuchtungseinrichtung ein Steuergerät (14) nach Anspruch 1 und einen Scheinwerfer (12) nach Anspruch 2 aufweist.

## Claims

1. A motor vehicle light controller (14), which is arranged for controlling a brightness of semiconductor light sources (D72, D73, ..., D84) of a motor vehicle headlight (12), which are located in a series circuit supplied by a constant current regulator (52.7) and can be switched on and off individually by actuation of individualized semiconductor light source bypass switches (U72, U73, ..., U84), wherein the controller (14) is arranged for establishing mean brightnesses of the semiconductor light sources (D72, D73, ..., D84) by actuation of the bypass switches (U72, U73, ..., U84) with pulse-width-modulated signals, the period length of which is the same for the semiconductor light sources (D72, D73, ..., D84), and the controller (14) is arranged for switching on semiconductor light sources (D72, D73, D74), the mean brightness of which is to be set at various values, within a period of the pulse-width-modulated signal each individually at various times and to switch them off jointly at an identical time for the semiconductor light sources (D72, D73, D74), **characterized in that** the light controller is arranged for controlling the brightness of the semiconductor light sources (D72, D73, D74), generating sequences of serial data, and forwarding them to the headlight (12), and for each bypass switch (U72, U73, U74), each of the sequences have a control bit controlling its switching state.

2. A motor vehicle headlight (12) having semiconductor light sources (D72, D73, ..., D84) which is arranged for causing a brightness of the semiconductor light sources (D72, D73, ..., D84) to be controlled, the semiconductor light sources (D72, D73, ..., D84) being located in a series circuit which is arranged for being supplied by a constant current regulator (52.7), and the headlight (12) has individualized semiconductor light source bypass switches (U72, U73, ..., U84), which can be switched on and off individually, and the headlight (12) is arranged for causing mean brightnesses of the semiconductor light sources (D72, D73, ..., D84) to be set by actuation of the bypass switches (U72, U73, ..., U84) with pulse-width-modulated signals, the period length of which is the same for the semiconductor light sources (D72, D73, D74), and the headlight (12) is arranged for causing semiconductor light sources (D72, D73, D74), the mean brightness of which is to be set at various values to be switched on, each individually at various times, within a period of their pulse-width-modulated signal and to cause them to be switched off jointly at an identical time for the semiconductor light sources (D72, D73, D74), **characterized in that** the headlight has a serial-parallel converter (54), which has an input arranged for picking serial data and an output for each bypass switch (U72, U73, U74) and is arranged for controlling the bypass switches (U72, U73, U74) with data located at its outputs.

3. The headlight (12) of claim 2, **characterized in that** each semiconductor light source (D72, D73, D74) has one or more light emitting diodes.

4. A motor vehicle lighting device (10), **characterized in that** the lighting device has a controller (14) of claim 1 and a headlight (12) of claim 2.

## Revendications

1. Dispositif de commande de lumière (14) pour un véhicule automobile, agencé pour commander une luminosité de sources lumineuses semi-conductrices (D72, D73, ..., D84) d'un phare (12) de véhicule automobile, qui sont disposées dans un circuit en série alimenté par un régulateur de courant constant (52.7) et qui peuvent être allumées et éteintes individuellement à l'aide de commutateurs de pontage (U72, U73, ..., U84) individuels par source lumineuse semi-conductrice, le dispositif de commande (14) étant agencé pour régler des luminosités moyennes des sources lumineuses semi-conductrices (D72, D73, ..., D84) par actionnement des commutateurs de pontage (U72, U73, ..., U84) à l'aide de signaux modulés en largeur d'impulsion dont la durée des périodes est la même pour les sources lumineuses semi-conductrices (D72, D73, ..., D84), le dispositif de commande (14) étant agencé pour allumer des sources lumineuses semi-conductrices (D72, D73, D74) dont la luminosité moyenne doit être ajustée à différentes valeurs, à l'intérieur d'une période du signal modulé en largeur d'impulsion, individuellement à différents instants, et pour les éteindre à un instant qui est le même pour les sources lumineuses semi-conductrices (D72, D73, D74), **caractérisé en ce que** le dispositif de commande de lumière est adapté pour engendrer, pour la commande de la luminosité des sources lumineuses semi-conductrices (D72, D73, D74), des séquences de données sérielles et de les transférer au phare (12), les séquences présentant pour chaque commutateur de pontage (U72, U73, U74) un bit de commande commandant l'état de commutation de celui-ci.

2. Phare (12) de véhicule automobile, comprenant des sources lumineuses semi-conductrices (D72, D73, ..., D84), qui est agencé pour faire commander une luminosité des sources lumineuses semi-conductrices (D72, D73, ..., D84), les sources lumineuses semi-conductrices (D72, D73, ..., D84) étant disposées dans un circuit en série qui est agencé pour être alimenté par un régulateur de courant constant (52.7), le phare (12) comportant des commutateurs de pontage (U72, U73, ..., U84) individuels par source lumineuse semi-conductrice qui peuvent être allumées et éteintes individuellement, et le phare (12) étant agencé pour faire ajuster des luminosités moyennes des sources lumineuses semi-conductrices (D72, D73, ..., D84) par actionnement des commutateurs de pontage (U72, U73, ..., U84) à l'aide de signaux modulés en largeur d'impulsion dont la durée des périodes est la même pour les sources lumineuses semi-conductrices (D72, D73, ..., D84), le phare (12) étant agencé pour faire allumer des sources lumineuses semi-conductrices (D72, D73, D74) dont la luminosité moyenne doit être ajustée à différentes valeurs, à l'intérieur d'une période du signal modulé en largeur d'impulsion, individuellement à différents instants, et pour les faire éteindre à un instant qui est le même pour les sources lumineuses semi-conductrices (D72, D73, D74), **caractérisé en ce que** le phare (12) comprend un convertisseur série-parallèle (54) qui comporte une entrée agencée pour recevoir des données sérielles et une sortie pour chaque commutateur de pontage (U72, U73, U74) et qui est agencé pour commander les commutateurs de pontage (U72, U73, U74) à l'aide des données disponibles à ses sorties.

3. Phare (12) selon la revendication 2, **caractérisé en ce que** chaque source lumineuse semi-conductrice (D72, D73, D74) comprend une ou plusieurs diodes luminescentes.

4. Dispositif d'éclairage de véhicule automobile (10) **caractérisé en ce que** le dispositif d'éclairage comprend un dispositif de commande (14) selon la revendication 1 et un phare (12) selon la revendication 2.
